# EUROPEAN PATENT SPECIFICATION

(11) **EP 0 564 039 B1**
(45) Date of publication and mention of the grant of the patent: **29.12.1999**
(21) Application number: 93200900.4
(22) Date of filing: 30.03.1993
(51) Int. Cl.: C08L 71/12, C08L 51/04, C08L 53/00, C08L 25/04

(54) **Polymeric thermoplastic composition based on polyphenylene ether and an impact-resistant vinyl aromatic copolymer**
Thermoplastische Polymerzusammensetzung von Polyphenylenether und einem schlagfesten Vinyl-aromatischen Copolymer
Composition de polymère thermoplastique à base de polyphénylène éther et un copolymer vinyl aromatique résistant à l'impact

(30) Priority: 01.04.1992 IT MI920775
(43) Date of publication of application: 06.10.1993
(73) Proprietor: ENICHEM S.p.A., 20124 Milano (IT)
(72) Inventor: Ghidoni, Dario, I-46023 Gonzaga ( Mantova ) (IT); Callaioli, Andrea, I-46100 Mantova (IT); Fasulo, Gian Claudio, I-46010 San Silvestro ( Mantova ) (IT); Cardi, Nicoletta, I-21057 Olgiate Olona ( Varese ) (IT)
(74) Representative: Fusina, Gerolamo

(56) References cited:
- EP-A- 0 052 854
- EP-A- 0 089 149
- EP-A- 0 151 780
- EP-A- 0 337 165
- EP-A- 0 400 506
- MACROMOLECULES vol. 24, no. 9, April 1991, WASHINGTON DC ,USA pages 2231 - 2235 WON HO JO ET AL 'Compatibilizing effect of a styrene-methyl methacrylate block copolymer etc.'

## Description

The present invention relates to a polymeric thermoplastic composition based on a polyphenylene ether and an impact-resistant vinyl aromatic copolymer.

More in particular, the present invention relates to a polymeric thermoplastic composition having a good balance of mechanical and thermal properties, improved impact resistance as well as a good processability comprising a polyphenylene ether and a impact-resistant vinyl aromatic copolymer.

The polyphenylene ether resins (PPE), also known as polyphenylene oxide resins, represent a well known family of engineering polymers which are characterized by a good combination of thermal, mechanical and dielectrical properties within a wide temperature range. This combination of properties makes the polyphenylene ether resins suitable for use in a wide number of applications by means of injection or extrusion molding techniques.

In spite of these numerous possible commercial applications of the polyphenylene ether resins (PPE), their utilization is limited due to their poor processability mainly attributable to the low fluidity in the molten state and to the narrow range of workability which can cause some difficulties during the extrusion and injection molding operations.

A further drawback is that the polyphenylene ether resins show a poor solvent resistance after molding and a low resiliency (IZOD), thus the use thereof for certain applications is further limited.

In order to improve these shortcomings it has been suggested to blend the polyphenylene ether resins with other polymers which possess said lacking properties, in order to obtain a material endowed with the desired property combination.

This approch, however, was successful only in a few cases; generally, in fact, the blending results in the combination of the worst characteristics of each component, the overal result being a material of such poor properties as not to be of any practical or commercial value.

The reasons for this drawback are the fact that not all the polymers are compatible with each other and, therefore, do not perfectly adhere. As a result, interfaces are formed among the components of the blend which represent weakness and breaking points.

Particularly, mixtures based on a vinyl aromatic copolymer, either as such or made impact-resistant by grafting it with a rubber, and a polyphenylene ether give arise to blends endowed with heterogeneous structure and mechanical weakness, due to the incompatibility between these two types of polymers.

It is also known from the literature that, for overcoming this drawback, an additive reactive with both the polyphenylene ether resin and the vinyl aromatic copolymer, generally called compatibilizing agents, is added to the mixture.

Thus, for example, German Patent No. 3,515,639 proposes the use of a styrene-acrylonitrile-chlorostyrene as compatibilizing agent between the polyphenylene ether and the acrylonitrile-butadiene-styrene resins (ABS).

U.S. Patent No. 4,588,623 describes the use of polyhydroxy-ether for compatibilizing a poly(aryleneether) and a styrene and/or acrylonitrile copolymer.

Published European Patent Application No. 0,337,165 discloses a thermoplastic composition comprising a polyphenylene ether, a styrene-acrylonitrile copolymer (SAN) and a compatibilizing agent which can be a graft polymer of a polymer A graft polymerized on a polymer B or an A and B block copolymer, wherein A and B are immiscible with one another and one of the two A and B polymers is miscible with the polyphenylene ether while the other of the A and B polymers is miscible with the styrene-acrylonitrile polymer (SAN).

Examples of compatibilizing agents disclosed in the above-reported European Patent Application are: PPE grafted on poly(methyl-methacrylate), a styrene-acrylonitrile copolymer grafted on polystyrene, a block copolymer comprising polystyrene blocks and methyl-methacrylate blocks.

The use of a polystyrene-polymethylmethacrylate block copolymer as compatibilizing agent between PPE and SAN is also described in "Macromolecules" 1991, 24 pages 2231-2235.

The known compositions, however, exhibit only some improved properties, such as, for example, a high heat distortion temperature (HDT) and/or a low viscosity at the molten state, while other requesed properties, such as the resilience, are not satisfied.

Object of the present invention is to overcome this drawback of the known compositions based on polyphenylene ether and a vinyl aromatic copolymer.

More particularly, the object of the present invention is to provide a thermoplastic composition based on polyphenylene ether and a vinyl aromatic copolymer which have a good balance of physical-mechanical and thermal properties, improved impact resistance as well as a good processability.

According to the present invention this and other objects are achieved by a polymeric thermoplastic composition comprising:
- (C₁): a polyphenylene ether;
- (C₂): an impact-resistant vinyl aromatic copolymer comprising a vinyl aromatic monomer and an acrylic monomer in a weight ratio ranging from 85/15 to 60/40, wherein the monomers are polymerized in the presence of and grafted on a rubbery substrate having a glass transition temperature (Tg) lower than 0°C, and
- (C₃): a compatibilizing agent consisting of a block copolymer based on a vinyl aromatic monomer and a ester of the (metha)acrylic acid, in an amount of at least 0.1 parts by weight of the compatibilizing copolymer (C₃) per 100 parts by weight of the resins (C₁) and (C₂).

In the compositions of the present invention, the proportions between the polyphenylene ether (C₁) and the impact-resistant vinyl aromatic copolymer (C₂) can vary within a wide range. Generally, the polyphenylene ether can be comprised between 5 and 95%, preferably between 25 and 75% by weight and, correspondingly, the impact-resistant vinyl aromatic copolymer between 95 and 5%, preferably between 75 and 25% by weight, with respect to the total weight of the two resins (C₁) and (C₂).

The compatibilizing copolymer (C₃) is present in an amount at least sufficient to effect the desired compatibility of the two resins (C₁) and (C₂). The expression "compatibility" is intended to encompass an adequate dispersion and homogenization of the two resins in a manner which provides a thermoplastic composition having satisfactory properties for the end use to which it is assigned.

Preferred compositions are those containing from 0.2 to about 30 parts by weight of the compatibilizing copolymer (C₃) per 100 parts by weight of the two resins (C₁) and (C₂).

Therefore, a preferred thermoplastic composition of the present invention comprises:
- 100 parts by weight of a mixture consisting of:
   5-95% by weight of a polyphenylene ether (C₁); and
   95-5% by weight of an impact-resistant vinyl aromatic copolymer (C₂);
- from 0.2 to 30 parts by weight of a compatibilizing copolymer (C₃) based on a vinyl aromatic monomer and an ester of the (metha)acrylic acid.

The polyphenylene ether (C₁) used in the compositions of the present invention is a well known polymer or copolymer which comprise a plurality of structural units having the following formula (I): 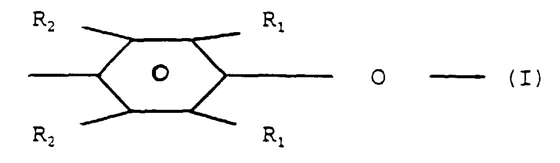 wherein:
each R₁ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₂ is independently hydrogen, a halogen atom, a primary or secondary alkyl radical containing from 1 to 7 carbon atoms, a substituted alkyl radical, phenyl, substituted phenyl, a C₁ - C7 alkyloxy radical, or a haloalkyloxy as defined for R₁.

Examples of R₁ and R₂ include: hydrogen; a halogen such as chlorine, bromine or fluorine; an alkyl radical or a substituted alkyl radical such as methyl, ethyl, n- and isopropyl, n-, sec-, iso- and tert- butyl, n-amyl, n-hexyl, 2,3-dimethylbutyl, chloro-ethyl, hydroxyethyl, phenylethyl, hydroxymethyl, carboxy-ethyl, methoxycarbonylethyl, cyanoethyl; aryl or substituted aryl radical such as phenyl, chlorophenyl, methylphenyl, dimethylphenyl, ethylphenyl; a benzyl radical or an allyl radical.

Polyphenylene ethers preferred in the present invention are those having formula: 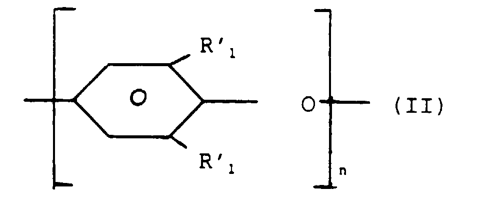 wherein R'₁ independently are an alkyl radical containing from 1 to 4 carbon atoms and n is at least 50 and preferably comprised between 60 and 600.

Illustrative examples of polyphenylene ethers which are particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;
poly(2,6-dimethyl-1,4-phenylene)ether is the most preferred.

The term polyphenylene ether (C₁), whenever used in the present specification and in the claims, includes both the homopolymers and the copolymers containing the structural units of formula (II) indicated hereinbefore, such as, for example, the copolymers comprising units deriving from 2,6-dimethylphenol and 2,3,6-trimethylphenol; as well as the grafted copolymers prepared by grafting one or more vinyl monomers such as acrylonitrile or vinylaromatic compounds such as styrene or polymers such as polystyrene or elastomers onto the polyphenylene ether chain.

The polyphenylene ethers generally have an average molecular weight (determined by Gel Permeation Chromatography) ranging from 5,000 to 120,000, and their inherent viscosity is higher than 0.1 dl/g and preferably ranges from 0.30 to 0.90 dl/g, measured in chloroform at 23°C.

These polyphenylene ethers can be produced by oxidation of a phenol compound with oxygen or an oxygen-containing gas, preferably in the presence of a catalyst for the oxidative coupling, as described in U.S. Patent Nos. 3,226,361; 3,234,183; 3,306,874; 3,306,875; 3,257,357; 3,257,358; 3,337,501; 3,787,361; 3,956,242; 3,962,181; 3,965,069; 4,075,174; 4,093,595-598; 4,102,865; 4,184,034; 4,385,168.

The component (C₂) of the thermoplastic composition of the present invention is an impact-resistant vinyl aromatic copolymer containing at least 5% by weight of a rubbery substrate having a Tg lower than 0°C. Generally, the impact-resistant vinyl aromatic copolymer contains from 20 to 60% by weight of a rubbery substrate having a Tg lower than 0°C and, correspondingly, from 80 to 40% by weight of a vinyl aromatic monomer-acrylic monomer copolymer in the weight ratio comprised between 85:15 and 60:40. Preferably, the impact-resistant vinyl aromatic copolymer contains from 20 to 40% by weight of a rubbery substrate having a Tg lower than 0°C and from 80 to 60% by weight of a vinyl aromatic monomer-acrylic monomer copolymer in the weight ratio comprised between 80:20 and 60:40.

The rubbery substrate having a Tg lower than 0°C, which is the substrate on which the acrylic and vinyl aromatic monomers are in part grafted and in part mechanically adhered in the form of vinyl aromatic monomer-acrylic monomer copolymer can be an olefinic copolymer, having a Mooney viscosity ranging from 10 to 150 ML-4 at 100°C, of at least two different straight chain alpha-mono-olefins such as ethylene, propylene, butene-1, octene-1, and the like, with at least another copolymerizable monomer, generally a polyene, and typically a non-conjugated diene. Preferably one of the alpha mono-olefins is ethylene together with another alpha mono-olefin having a longer chain. The weight ratio of the ethylene to the other alpha-mono-olefin in the rubbery copolymer is usually in the range of from 20/80 to 80/20. Particularly preferred copolymers are the ethylene-propylene-non-conjugated diene terpolymer in which the non-conjugated diene can be cyclic or acyclic such as: 5-methylene-2-norbornene, 5-ethylidene-2-norbornene, 5-isopropylidene-2-norbornene, 1,4-pentadiene, 1,4-hexadiene, 1,5-hexadiene, 1,5-heptadiene, 1,7,9-dodecatriene, methyl-1,5-eptadiene, 2,5-norbornadiene, cyclo-1,5-octadiene, dicyclopentadiene, tetrahydroindene, 5-methyl-tetrahydroindene. The diene content ranges from about 5 to 20% by weight and, preferably, from 8 to 18% by weight of diene monomeric units in the rubbery terpolymer.

Particularly interesting results are obtained by using an ethylene-propylene-non-conjugated diene terpolymer having a Mooney viscosity (ML-4), determined at 100°C, ranging from 30 to 90 , and a iodine number higher than 5, preferably ranging from 10 to 40.

Altenatively, the rubbery substrate can be a diene rubber such as polybutadiene, polymers of the butadiene with a comonomer such as styrene or acrylonitrile, containing at least 50% and preferably at least 80% by weight of butadiene, or a linear block rubber or a radial block rubber based on butadiene.

The term "vinyl aromatic monomer", whenever used in the present description and in the claims, is to be understood as including the ethylenically unsaturated aromatic compounds having general formula (III): 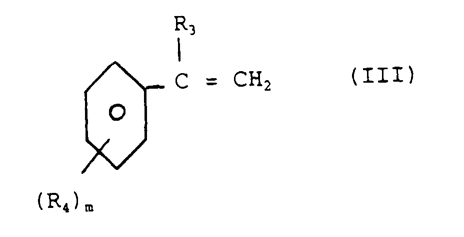 wherein:
- R₃: represents a hydrogen, a halogen or an alkyl radical having from 1 to 4 carbon atoms;
- R₄: represents a hydrogen, a halogen or an alkyl radical having from 1 to 4 carbon atoms and
- m: is 0 or an integer comprised between 1 and 5.

Examples of vinyl aromatic monomers having the above-reported general formula are: styrene; methylstyrene; mono-, di-, tri-, tetra-, and penta-chlorostyrene and the corresponding alpha-methyl-styrenes; styrenes and corresponding alpha-methyl-styrenes which are alkylated in the nucleus such as ortho- and para-methylstyrenes; ortho- and para ethylstyrenes; ortho- and para-methyl-alpha-methylstyrenes.

These monomers can be utilized either alone or in admixture with one another.

By acrylic monomer it is meant in the first place and preferably acrylonitrile; although other acrilic monomers such as methacrylonitrile, acrylic acid, methacrylic acid and C₁ - C₇-alkyl esters of the acrylic or methacrylic acid can be used.

Examples of copolymerization methods for obtaining the impact-resistant styrene copolymers utilized in the composition of the present invention are described in Italian Patent No.792,269 and in U.S. Patent Nos. 3,819,765; 3,489,822; 3,642,950 and 3,849,518.

It is understood that in the grafting copolymerization not all the resin forming monomer is really grafted on the rubbery substrate; a portion of the monomers forms a free resin which is present in physical admixture with the grafted copolymer. The amount of monomer grafted on the copolymer can be determined by extraction of the product with a solvent ofr the grafted resin.

Typically, the component (C₂) is a AES resin namely consisting of a EPDM rubber on which the styrene-acrylonitrile copolymer (SAN) is partially grafted and partially mechanically adhered; or a resin consisting of a diene rubbery substrate on which it is grafted a vinyl aromatic monomer and acrylonitrile, such as, for example ABS, or methylmethacrylate, such as MBS.

The compatibilizing agent (C₃) utilized in the compositions of the present invention is a block copolymer of the type (X-Y) including a first sequence or block (X) formed with monomeric units derived from a vinyl aromatic monomer; and a second sequence or block (Y) formed with monomeric units derived from an ester of the (metha)acrylic acid. An intermediate alpha-methylstyrene or 1,1'-diphenylethylene monomer can be used to link the first and second sequences.

In the block copolymer (C₃), the X and Y blocks are included in a weight ratio ranging from 5:1 to 1:5.

The block copolymer (C₃) utilized in the composition of the present invention can consists of only the above-reported sequences or can include further copolymerizable sequences or blocks together with the above-reported monomer sequences.

Any vinyl aromatic monomer can be used in the monomeric units of the first sequence (X).

Generally, the vinyl aromatic monomers having general formula (III) can be used, even if styrene is particularly preferred.

The monomeric units forming block (Y) can be derived from a C₁-C₈ alkyl ester of the (metha)acrylic acid, a C₄-C₈ cycloalkyl ester of the (metha)acrylic acid or a phenyl- or a C₁-C₈ alkyl-substituted phenyl ester of the (metha)acrylic acid. Examples of esters of the acrylic or methacrylic acid includes: methyl-acrylate, methyl-methacrylate, ethyl-acrylate, ethyl-methacrylate, isopropyl-acrylate, isopropyl-methacrylate, butyl-acrylate, exyl-acrylate, cycloexyl-acrylate, phenyl-acrylate and so on. The alkyl-esters of the (metha)acrylic acid containing from 1 to 4 carbon atoms in the alkyl radical are preferred and among these methylmethacrylate is particularly preferred.

Generally the average molecular weight of the first block (X) is between 2,000 and 1,000,000, preferably between 5,000 and 500,000, and more preferably between 8,000 and 200,000. The average molecular weight of the second block (Y) is generally between 2,000 and 1,000,000, preferably between 5,000 and 500,000 and more preferably between 8,000 and 200,000.

The total molecular weight of the block copolymer (C₃) is generally between 4,000 and 2,000,000, preferably between 10,000 and 1,000,000 and more preferably between 16,000 and 400,000.

The block copolymer (C₃) used in the composition of the present invention has preferably a linear structure.

The block copolymer (C₃) can be prepared according to well known polymerization techniques such as, for example, by anionic, radicalic, radicalic-anionic or anionic-radicalic polymerization process, as described in U.S. Patent No. 4,461,874; in J. Appl. Polymer Sci. Vol.24, page 2051 (1979); J. Appl. Sci. Vol. 33, page 727 (1978); Polymer Vol. 32, page 19 (1991); Eur. Polymer J. Vol. 25 No. 7/8, page 643 (1989); Eur. Polymer J. Vol. 26, No. 5, page 525 (1990); Polymer Vol. 29, May, page 951 (1988).

This block copolymer (C₃) can be also prepared by polymerization by using telekelic or monoterminated polymers and carbonyl manganese, as described in J. Macromol. Sci. Chem. A25 (4), page 445; or by using monomers containing both polymerizable and photosensible sites, as described in Makromol. Chem. page 2187 (1988).

The compositions of the present invention can be prepared by any conventional mixing method. For example, the mixing can be carried out in the molten state and time and temperature are selected and determined time-to-time as a function of the composition. The temperatures are generally in the range of from 200 to 300°C.

Any known mixing unit can be utilized. The method can be continuous or discontinuous. Specifically, single-screw and two-screw extruders, Banbury type inner mixers, mixing rollers and the like can be used.

Although all the composition components can be introduced at the beginning and directly into the mixing unit, in some cases it is preferable to pre-mix one of the two resins before the mixing with the other resin.

In addition to components (C₁), (C₂), and (C₃), the compositions of the present invention can contain reinforcing additives such as for example glass fibres, carbon fibres, organic and inorganic high-modulus fibres, metal fibres, inorganic fillers, etc., as well as antiflame agents, dyestuffs, pigments, stabilizers, lubricants, etc., which are well-known to those skilled in the art.

The reinforcing additives can be used in amounts generally not exceeding 50% by weight and, preferably, not higher than 30% by weight calculated on the total composition.

Particularly preferred reinforcing additives are the glass fibres, which can be untreated or, better, treated with silanes or titanates, as it is well-known to the technicians and to the manufacturers of said fibres.

Suitable stabilizers to be used in the compositions of the present invention comprise many of the known thermal stabilizers and antioxidants suitable and generally utilized for the vinyl aromatic resins and for the polyphenylene ether resins. For example, liquid phosphates and hindered phenols can be added to the compositions of the present invention, in amounts which can range from 0.05 to 5% by weight.

The compositions subject matter of the present invention are easily processable by injection molding or by extrusion and exhibit a complex of properties which make them suited to be utilized for the manufacture of shaped articles having a high impact strength along with a good thermal resistance a low water sensitivity. Thanks to these properties, the compositions of the present invention find the use in the automotive sector, for the manufacture of articles which can be furnace-painted, parts which enter into contact with motors, houshold electric apparatus, electronic articles and technical articles in general in the form of cups, boxes, containers, panels, sheets, rods.

In order to better understand the present invention and to reduce it to practice, a few illustrative examples are given hereinafter, which however are not limitative of the scope of the invention.

### EXAMPLE 1 (comparison)

Into a BRABENDER plastograph, equipped with a 50 ml cell and heated at 260 °C, there was introduced a mixture, prepared at room temperature, consisting of:
- (C₁): poly(2,6-dimethyl-1,4-phenylene)ether (PPE) having an intrinsic viscosity of 0.54 (in chloroform at 23°C) in the amount reported in the following Table;
- (C₂): an impact-resistant grafted styrene copolymer (AES) consisting of 26.6% by weight of EPDM rubber having a Mooney viscosity 62-72 ML-4 at 100°C and a iodine number of 18, and 73.4% by weight of a styrene/acrylonitrile copolymer (SAN) in the weight ratio 74/26, in the amount reported in the following Table.

The BRABENDER mastication speed was 80 r.p.m. for a residence time of 4 minutes.

The resulting mixture was ground, compression molded at 260 °C and characterized.

The characteristics of the thus obtained mixture are listed in the following Table.

### EXAMPLES 2-4

The operative conditions of example 1 were repeated by blending to the two resins C₁ and C₂, a diblock copolymer 1 (C₃) consisting of a polystyrene block and a polymethylmethacrylate block in the weight ratio 34/66, having an average molecular weight of 95,000 and an average molecular weight of the styrene block of 32,000.

The characteristics of the thus obtained mixture are listed in the following Table.

### EXAMPLES 5-7

The operative conditions of example 1 were repeated by blending to the two resins C₁ and C₂, a diblock copolymer 2 (C₃) consisting of a polystyrene block and a polymethylmethacrylate block in the weight ratio 34/66, having an average molecular weight of 192,000 and an average molecular weight of the styrene block of 65,000.

The characteristics of the thus obtained mixture are listed in the following Table.

### EXAMPLE 8 (comparison)

The operative conditions of example 4 were repeated by substituting the impact-resistant styrene copolymer (C₂) with a styrene/acrylonitrile copolymer (SAN) (C₄) having the weight composition 74/26.

The characteristics of the thus obtained mixtures are listed in the following Table.

In the Table the measured characteristics and the used methods were the following ones:

### Mechanical Properties

The impact resistance (IZOD) with notch at 23°C, according to standard ASTM D 256, on 3.2 mm thick specimens was determined.

### Thermal Properties

The softening temperature VICAT at 1 and 5 kg in oil, according to standard ISO 306, was determined.

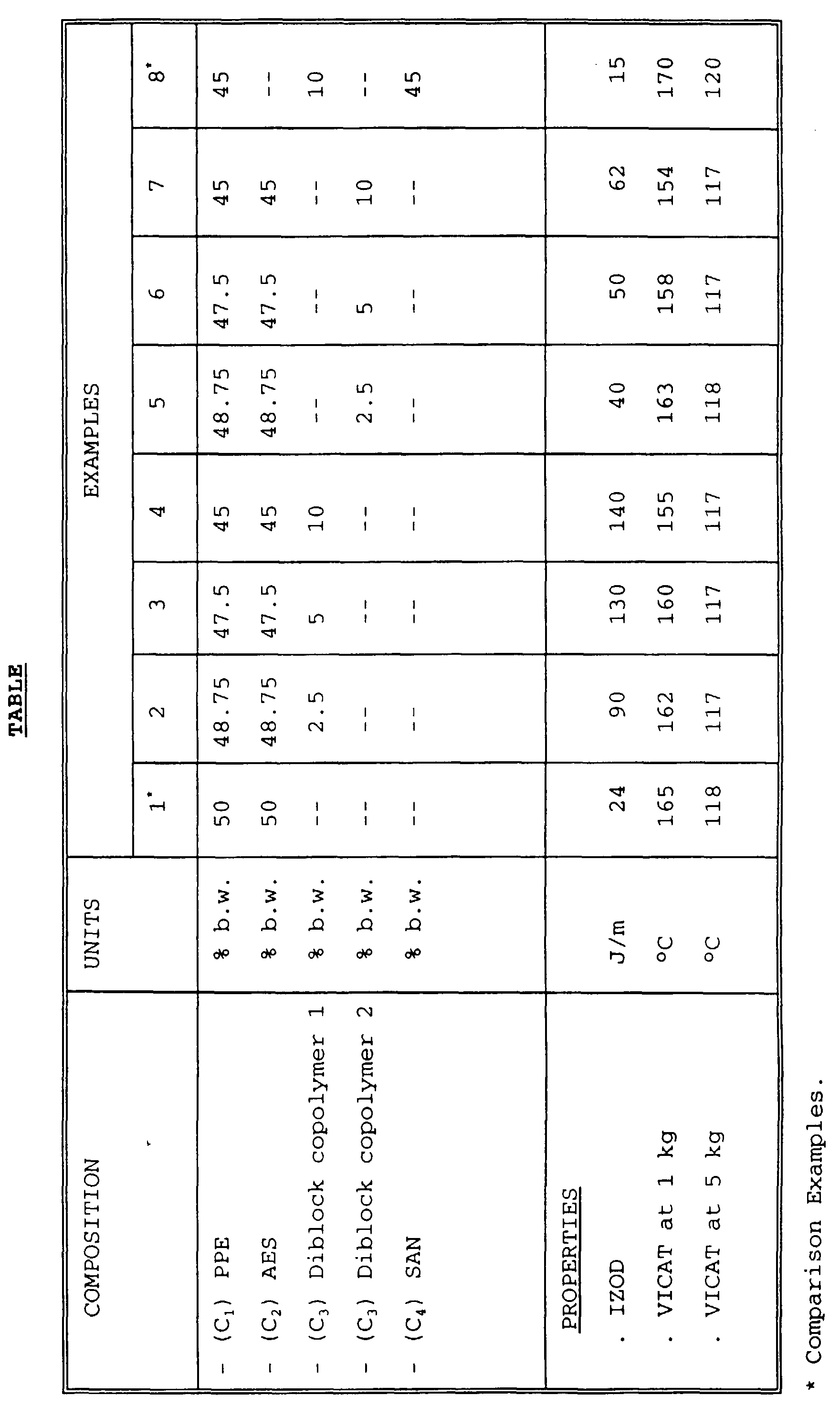

## Claims

1. A polymeric thermoplastic composition having a good balance of mechanical and thermal properties, improved impact resistance as well as a good processability, comprising:
(C₁) a polyphenylene ether;
(C₂) an impact-resistant vinyl aromatic copolymer comprising a vinyl aromatic monomer and an acrylic monomer in a weight ratio ranging from 85/15 to 60/40, wherein the monomers are polymerized in the presence of and grafted on a rubbery substrate having a glass transition temperature (Tg) lower than 0°C, and
(C₃) a compatibilizing agent consisting of a block copolymer based on a vinyl aromatic monomer and a ester of the (metha)acrylic acid, in an amount of at least 0.1 parts by weight with respect to 100 parts by weight of the resins (C₁) and (C₂).

2. The polymeric thermoplastic composition according to claim 1, wherein the polyphenylene ether (C₁) is comprised between 5 and 95% by weight and, correspondingly, the impact-resistant vinyl aromatic copolymer (C₂) between 95 and 5%, with respect to the total weight of the two resins (C₁) and (C₂).

3. The polymeric thermoplastic composition according to anyone of the preceding claims, comprising:
- 100 parts by weight of a mixture consisting of:
25-75% by weight of a polyphenylene ether (C₁); and
75-25% by weight of an impact-resistant vinyl aromatic copolymer (C₂);
- from 0.2 to 30 parts by weight of a compatibilizing block copolymer (C₃) based on a vinyl aromatic monomer and an ester of the (metha)acrylic acid.

4. The polymeric thermoplastic composition according to anyone of the preceding claims, wherein the polyphenylene ether (C₁) is a polymer or a copolymer/containing a plurality of structural units of formula (I): 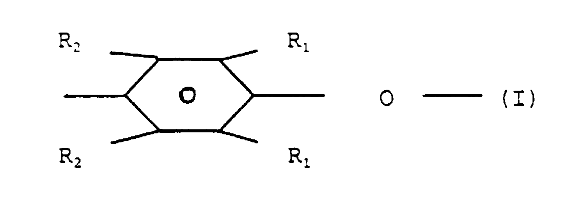 wherein:
each R₁ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₂ is independently hydrogen, a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy as defined for R₁.

5. The polymeric thermoplastic composition according to claim 4, wherein the polyphenylene ether has the formula (II): 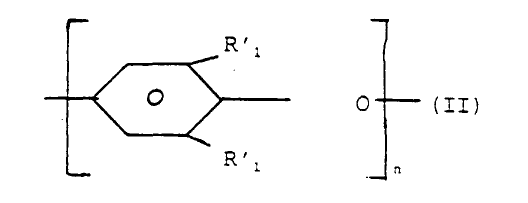 wherein R'₁ independently from each other, is an alkyl radical containing from 1 to 4 carbon atoms and "n" is at least 50.

6. The polymeric thermoplastic composition according to anyone of the preceding claims, wherein the polyphenylene ether has a number average molecular weight ranging from 5,000 to 120,000 and an inherent viscosity higher than 0.1 dl/g, measured in chloroform at 23°C.

7. The polymeric thermoplastic composition according to anyone of the preceding claims, wherein the impact-resistant vinyl aromatic copolymer (C₂) contains from 20 to 60% by weight of a rubbery substrate having a Tg lower than 0°C and, correspondingly, from 80 to 40% by weight of a vinyl aromatic monomer-acrylic monomer copolymer in the weight ratio comprised between 85:15 and 60:40.

8. The polymeric thermoplastic composition according to claim 7, wherein the impact-resistant vinyl aromatic copolymer (C₂) contains from 20 to 40% by weight of a rubbery substrate having a Tg lower than 0°C and, correspondingly, from 80 to 60% by weight of a vinyl aromatic monomer-acrylic monomer copolymer in the weight ratio comprised between 80:20 and 60:40.

9. The polymeric thermoplastic composition according to anyone of the preceding claims, wherein the rubbery substrate having a Tg lower than 0 °C is an olefinic copolymer, having a Mooney viscosity ranging from 10 to 150 ML-4 at 100°C, of ethylene, another alpha mono-olefin having a longer chain and a non-conjugated diene, wherein the weight ratio of the ethylene to the other alpha-mono-olefin is in the range of from 20/80 to 80/20 and the diene content ranges from about 5 to 20% by weight with respect to the copolymer.

10. The polymeric thermoplastic composition according to claim 9, wherein the rubbery substrate is an ethylene-propylene-non-conjugated diene terpolymer having a Mooney viscosity (ML-4), determined at 100°C, ranging from 30 to 90 , and a iodine number higher than 5, preferably ranging from 10 to 40.

11. The polymeric thermoplastic composition according to anyone of the preceding claims from 1 to 8, wherein the rubbery substrate having a Tg lower than 0°C is a diene rubber such as polybutadiene, polymers of the butadiene with styrene or acrylonitrile, having a butadiene content of at least 50%, a linear block rubber or a radial block rubber based on butadiene.

12. The polymeric thermoplastic composition according to anyone of the preceding claims, wherein the vinyl aromatic monomer is styrene.

13. The polymeric thermoplastic composition according to anyone of the preceding claims, wherein the acrylic monomer is acrylonitrile.

14. The polymeric thermoplastic composition according to anyone of the preceding claims, wherein the block copolymer (C₃) is of the type (X-Y) including a first sequence or block (X) formed with monomeric units derived from a vinyl aromatic monomer; and a second sequence or block (Y) formed with monomeric units derived from an ester of the (metha)acrylic acid.

15. The polymeric thermoplastic composition according to claim 14, wherein the two blocks (X) and (Y) are linked by an intermediate alpha-methylstyrene or 1,1'-diphenylethylene monomer.

16. The polymeric thermoplastic composition according to claim 14 or 15, wherein the weight ratio between the two blocks (X) and (Y) ranges from 5:1 to 1:5.

17. The polymeric thermoplastic composition according to anyone of the preceding claims, wherein the ester of the (metha)acrylic acid is selected from a C₁-C₈ alkyl ester of the (metha)acrylic acid; a C₄-C₈ cycloalkyl ester of the (metha)acrylic acid; a phenyl- and a C₁-C₈ alkyl-substituted phenyl ester of the (metha)acrylic acid.

18. The polymeric thermoplastic composition according to anyone of the preceding claims from 14 to 17, wherein the block (X) is formed from units derived from styrene and block (Y) from units derived from methylmethacrylate.

19. The polymeric thermoplastic composition according to anyone of the preceding claims, wherein the block copolymer (X-Y) (C₃) has a molecular weight ranging between 4,000 and 2,000,000, preferably between 16,000 and 400,000 and the blocks (X) and (Y) each has an average molecular weight ranging between 2,000 and 1,000,000.

20. The polymeric thermoplastic composition according to anyone of the preceding claims, wherein the block copolymer (C₃) has a linear structure.

21. The polymeric thermoplastic composition according to anyone of the preceding claims, containing in addition reinforcing additives, antiflame agents, dyestuffs, pigments, stabilizers, and/or lubricants.

22. The polymeric thermoplastic composition according to claim 19, wherein the reinforcing additive is selected from the group consisting of glass fibres, carbon fibres, organic or inorganic high modulus fibres and metal fibres, in amoumts not exceeding 50% by weight with respect to the total composition.

23. The polymeric thermoplastic composition according to claim 5, wherein n is comprised between 60 and 600.

24. The polymeric thermoplastic composition according to claim 6, wherein the inherent viscosity is comprised between 0.30 and 0.90 dl/g, measured in chloroform at 23°C.

25. The polymeric thermoplastic composition according to claim 11, wherein the butadiene content is of at least 80% by weight.

26. The polymeric thermoplastic composition according to claim 19, wherein the blocks (X) and (Y) each has an average molecular weight ranging between 8,000 and 200,000.

## Patentansprüche

1. Polymere thermoplastische Masse mit guter Ausgewogenheit von mechanischen und thermischen Eigenschaften, verbesserter Schlagfestigkeit, sowie guter Verarbeitbarkeit, umfassend:
(C₁) einen Polyphenylenether;
(C₂) ein schlagbeständiges vinylaromatisches Copolymer, umfassend ein vinylaromatisches Monomer und ein acrylisches Monomer in einem Gewichtsverhältnis im Bereich von 85/15 bis 60/40, wobei die Monomere in Gegenwart von oder auf ein kautschukartiges Substrat mit einer geringeren Glasübergangstemperatur (Tg) als 0°C polymerisiert oder gepfropft werden, und
(C₃) ein Mittel zum Verträglichmachen, bestehend aus einem auf einem vinylaromatischen Monomer und einem Ester der (Meth)acrylsäure basierenden Blockcopolymer, in einer Menge von mindestens 0.1 Gew.-Teil in bezug auf 100 Gew.-Teile der Harze (C₁) und (C₂).

2. Polymere thermoplastische Masse nach Anspruch 1, in der der Polyphenylenether (C₁) zwischen 5 und 95 Gew.-% beträgt und dementsprechend das schlagbeständige vinylaromatische Copolymer (C₂) zwischen 95 und 5 %, in bezug auf das Gesamtgewicht der zwei Harze (C₁) und (C₂) beträgt.

3. Polymere thermoplastische Masse nach einem der vorstehenden Ansprüche, umfassend:
- 100 Gew.-Teile eines Gemisches, bestehend aus:
25 - 75 Gew.-% eines Polyphenylenethers (C₁); und
75 - 25 Gew.-% eines schlagbeständigen vinylaromatischen Copolymers (C₂);
- 0.2 bis 30 Gew.-Teile eines verträglichmachenden Blockcopolymers (C₃), basierend auf einem vinylaromatischen Monomer und einem Ester der (Meth)acrylsäure.

4. Polymere thermoplastische Masse nach einem der vorstehenden Ansprüche, in der der Polyphenylenether (C₁) ein Polymer oder ein Copolymer ist, das eine Vielzahl von Struktureinheiten der Formel (I) umfaßt: 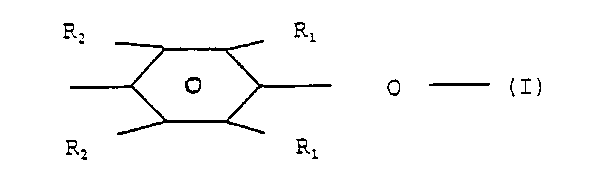 in der:
jeder der Reste R₁ unabhängig ein Halogenatom, ein primärer oder sekundärer Alkylrest, der 1 bis 7 Kohlenstoffatome enthält, ein substituierter Alkylrest, eine Phenylgruppe, eine substituierte Phenylgruppe, ein C₁-C₇-Alkyloxyrest oder ein Halogenalkyloxyrest ist;
wobei mindestens zwei Kohlenstoffatome die Halogen- und Sauerstoffatome trennen;
jeder Rest R₂ unabhängig ein Wasserstoff-, Halogenatom, ein primärer oder sekundärer Alkylrest, der 1 bis 7 Kohlenstoffatome enthält, ein substituierter Alkylrest, eine Phenylgruppe, eine substituierte Phenylgruppe, ein C₁-C₇-Alkyloxyrest oder ein Halogenalkyloxyrest ist, wie für R₁ definiert.

5. Polymere thermoplastische Masse nach Anspruch 4, in der der Polyphenylenether die Formel (II) aufweist: 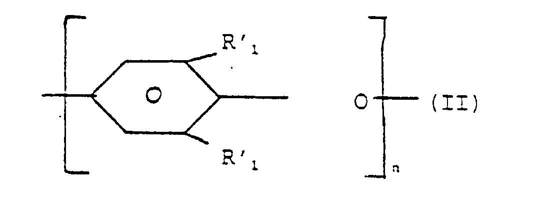 in der die Reste R'₁ unabhängig voneinander einen Alkylrest darstellen, der 1 bis 4 Kohlenstoffatome enthält, und ,,n" mindestens 50 ist.

6. Polymere thermoplastische Masse nach einem der vorstehenden Ansprüche, in der der Polyphenylenether ein Zahlenmittel des Molekulargewichts im Bereich von 5000 bis 120000 und eine größere inhärente Viskosität als 0.1 dl/g, gemessen in Chloroform bei 23°C, aufweist.

7. Polymere thermoplastische Masse nach einem der vorstehenden Ansprüche, in der das schlagbeständige vinylaromatische Copolymer (C₂) 20 bis 60 Gew.-% eines kautschukartigen Substrats mit einer geringeren Tg als 0°C und entsprechend 80 bis 40 Gew.-% eines Copolymers aus vinylaromatischem Monomer und acrylischem Monomer in einem Gewichtsverhältnis zwischen 85:15 und 60:40 enthält.

8. Polymere thermoplastische Masse nach Anspruch 7, in der das schlagbeständige vinylaromatische Copolymer (C₂) 20 bis 40 Gew.-% eines kautschukartigen Substrats mit einer geringeren Tg als 0°C und entsprechend 80 bis 60 Gew.-% eines Copolymers aus vinylaromatischem Monomer und acrylischem Monomer in einem Gewichtsverhältnis zwischen 80:20 und 60:40 enthält.

9. Polymere thermoplastische Masse nach einem der vorstehenden Ansprüche, in der das kautschukartige Substrat mit einer geringeren Tg als 0°C ein olefinisches Copolymer mit einer Mooney-Viskosität im Bereich von 10 bis 150 ML-4 bei 100°C von Ethylen, einem anderen alpha-Monoolefin mit einer längeren Kette und einem nicht konjugierten Dien ist, wobei das Gewichtsverhältnis von Ethylen zu dem anderen alpha-Monoolefin im Bereich von 20/80 bis 80/20 liegt und der Diengehalt etwa 5 bis 20 Gew.-% in bezug auf das Copolymer beträgt.

10. Polymere thermoplastische Masse nach Anspruch 9, in der das kautschukartige Substrat ein Terpolymer aus Ethylen, Propylen und nicht konjugiertem Dien mit einer Mooney-Viskosität (ML-4), bestimmt bei 100°C, im Bereich von 30 bis 90 und einer größeren Jodzahl als 5, vorzugsweise im Bereich von 10 bis 40, ist.

11. Polymere thermoplastische Masse nach einem der vorstehenden Ansprüche 1 bis 8, wobei das kautschukartige Substrat mit einer geringeren Tg als 0°C ein Dienkautschuk, wie Polybutadien, Polymere des Butadiens mit Styrol oder Acrylnitril mit einem Butadiengehalt von mindestens 50 %, ein linearer Blockkautschuk oder ein auf Butadien basierender Radikalblockkautschuk ist.

12. Polymere thermoplastische Masse nach einem der vorstehenden Ansprüche, in der das vinylaromatische Monomer Styrol ist.

13. Polymere thermoplastische Masse nach einem der vorstehenden Ansprüche, in der das acrylische Monomer Acrylnitril ist.

14. Polymere thermoplastische Masse nach einem der vorstehenden Ansprüche, in der das Blockcopolymer (C₃) vom Typ (X-Y) ist, einschließlich einer ersten Sequenz oder eines Blocks (X), gebildet mit aus einem vinylaromatischen Monomer abgeleiteten Monomereinheiten; und einer zweiten Sequenz oder eines Blocks (Y), gebildet mit von einem Ester der (Meth)acrylsäure abgeleiteten Monomereinheiten.

15. Polymere thermoplastische Masse nach Anspruch 14, in der die zwei Blöcke (X) und (Y) durch ein dazwischenliegendes alpha-Methylstyrol- oder 1,1'-Diphenylethylenmonomer verbunden sind.

16. Polymere thermoplastische Masse nach Anspruch 14 oder 15, in der das Gewichtsverhältnis zwischen den zwei Blöcken (X) und (Y) 5:1 bis 1:5 beträgt.

17. Polymere thermoplastische Masse nach einem der vorstehenden Ansprüche, in der der Ester der (Meth)acrylsäure ausgewählt aus einem C₁-C₈-Alkylester der (Meth)acrylsäure; einem C₄-C₈-Cycloalkylester der (Meth)acrylsäure; einem phenyl- und einem C₁-C₈-alkylsubstituierten Phenylester der (Meth)acrylsäure ist.

18. Polymere thermoplastische Masse nach einem der vorstehenden Ansprüche 14 bis 17, in der der Block (X) aus von Styrol abgeleiteten Einheiten gebildet wird und der Block (Y) aus von Methylmethacrylat abgeleiteten Einheiten gebildet wird.

19. Polymere thermoplastische Masse nach einem der vorstehenden Ansprüche, in der das Blockcopolymer (X-Y) (C₃) ein Molekulargewicht im Bereich zwischen 4000 und 2000000, vorzugsweise zwischen 16000 und 400000, aufweist und die Blöcke (X) und (Y) jeweils ein durchschnittliches Molekulargewicht im Bereich zwischen 2000 bis 1000000 aufweisen.

20. Polymere thermoplastische Masse nach einem der vorstehenden Ansprüche, in der das Blockcopolymer (C₃) lineare Struktur aufweist.

21. Polymere thermoplastische Masse nach einem der vorstehenden Ansprüche, die zusätzlich verstärkende Zusätze, Flammschutzmittel, Farbstoffe, Pigmente, Stabilisatoren und/oder Gleitmittel enthält.

22. Polymere thermoplastische Masse nach Anspruch 19, in der der verstärkende Zusatz ausgewählt ist aus Glasfasern, Kohlenstoffasern, organischen oder anorganischen Fasern mit hohem Modul und Metallfasern, in Mengen, die 50 Gew.-% in bezug auf die gesamte Masse nicht übersteigen.

23. Polymere thermoplastische Masse nach Anspruch 5, in der n zwischen 60 und 600 beträgt.

24. Polymere thermoplastische Masse nach Anspruch 6, in der die inhärente Viskosität zwischen 0.30 und 0.90 dl/g, gemessen in Chloroform bei 23°C, beträgt.

25. Polymere thermoplastische Masse nach Anspruch 11, in der der Butadiengehalt mindestens 80 Gew.-% beträgt.

26. Polymere thermoplastische Masse nach Anspruch 19, in der die Blöcke (X) und (Y) jeweils ein durchschnittliches Molekulargewicht im Bereich zwischen 8000 und 200000 aufweisen.

## Revendications

1. Une composition thermoplastique polymère possédant un bon équilibre de propriétés mécaniques et thermiques, une résistance au choc améliorée ainsi qu'une bonne faculté de mise en oeuvre comprenant :
(C₁) un éther de polyphénylène ;
(C₂) un copolymère vinylique aromatique résistant au choc contenant un monomère vinylique aromatique et un monomère acrylique clans un rapport pondéral s'étendant de 85/15 à 60/40, dans lequel les monomères sont polymérisés en présence de et greffés sur un substrat caoutchouteux possédant une température de transition vitreuse (Tg) inférieure à 0°C, et
(C₃) un agent compatibilisant consistant en un copolymère séquencé à base d'un monomère vinylique aromatique et d'un ester de l'acide (méth)acrylique en une quantité d'au moins 0,1 partie en poids par rapport à 100 parties en poids des résines (C₁) et (C₂).

2. La composition thermoplastique polymère selon la revendication 1, dans laquelle l'éther de polyphénylène (C₁) représente entre 5 et 95% en poids et, de manière similaire, le copolymère vinylique aromatique résistant au choc (C₂) représente entre 95 et 5%, par rapport au poids total des deux résines (C₁) et (C₂).

3. La composition thermoplastique polymère selon l'une quelconque des revendications précédentes, comprenant :
- 100 parties en poids d'un mélange consistant en :
25-75% en poids d'un éther de polyphénylène (C₁) et
75-25% en poids d'un copolymère vinylique aromatique résistant au choc (C₂) ;
- 0,2 à 30 parties en poids d'un copolymère séquencé compatibilisant (C₃) à base d'un monomère vinylique aromatique et d'un ester de l'acide (méth)acrylique.

4. La composition thermoplastique polymère selon l'une quelconque des revendications précédentes, dans laquelle l'éther de polyphénylène (C₁) est un polymère ou un copolymère contenant plusieurs motifs structuraux de formule (I) : 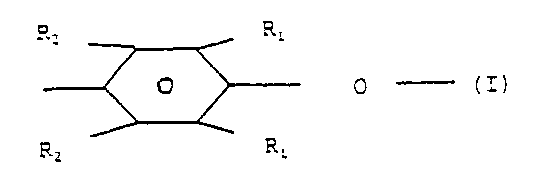 dans laquelle :
chaque R₁ est, indépendamment, un atome d'halogène, un radical alkyle primaire ou secondaire contenant 1 à 7 atomes de carbone, un radical alkyle substitué, un phényle, un phényle substitué, un radical alkyloxy en C₁ - C₇ ou un haloalkyloxy dans lequel au moins deux atomes de carbone séparent les atomes d'halogène et d'oxygène ;
chaque R₂ est, indépendamment, de l'hydrogène, un atome d'halogène, un radical alkyle primaire ou secondaire contenant 1 à 7 atomes de carbone, un radical alkyle substitué, un phényle, un phényle substitué, un radical alkyloxy en C₁ - C₇ ou un haloalkyloxy tel que défini à propos de R₁.

5. La composition thermophastique polymère selon la revendication 4, dans laquelle l'éther de polyphénylène répond à la formule (II) : 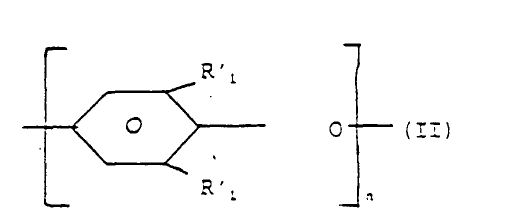 dans laquelle R'₁ est, indépendamment l'un de l'autre, un radical alkyle contenant 1 à 4 atomes de carbone et "n" est au moins 50.

6. La composition thermoplastique polymère selon l'une quelconque des revendications précédentes, dans laquelle l'éther de polyphénylène possède un poids moléculaire moyen en nombre de 5.000 à 120.000 et une viscosité intrinsèque supérieure à 0,1 dl/g, mesurée dans du chloroforme à 23°C.

7. La composition thermoplastique polymère selon l'une quelconque des revendications précédentes, dans laquelle le copolymère vinylique aromatique résistant au choc (C₂) contient 20 à 60% en poids d'un substrat caoutchouteux possédant une Tg inférieure à 0°C et, de manière similaire, 80 à 40% en poids d'un copolymère de monomère vinylique aromatique-monomère acrylique clans le rapport pondéral compris entre 85:15 et 60:40.

8. La composition thermoplastique polymère selon la revendication 7, dans laquelle le copolymère vinylique aromatique résistant au choc (C₂) contient 20 à 40% en poids d'un substrat caoutchouteux possédant une Tg inférieure à 0°C et, de manière similaire, 80 à 60% en poids d'un copolymère de monomère vinylique aromatique-monomère acrylique dans le rapport pondéral compris entre 80:20 et 60:40.

9. La composition thermoplastique polymère selon l'une quelconque des revendications précédentes, dans laquelle le substrat caoutchouteux possédant une Tg inférieure à 0°C est un copolymère oléfinique d'éthylène, d'une autre alpha monooléfine possédant une chaîne plus longue et d'un diène non conjugué ayant une viscosité Mooney comprise entre 10 et 150 ML-4 à 100°C, dans lequel le rapport pondéral de l'éthylène à l'autre alpha monooléfine se situe dans la gamme de 20/80 à 80/20 et la teneur en diène s'étend d'environ 5 à 20% en poids par rapport au copolymère.

10. La composition thermoplastique polymère selon la revendication 9, clans laquelle le substrat caoutchouteux est un terpolymère d'éthylène-propylène-diène non conjugué possédant une viscosité Mooney (ML-4), déterminée à 100°C, comprise entre 30 et 90 et un indice d'iode supérieur à 5, s'étendant de préférence de 10 à 40.

11. La composition thermoplastique polymère selon l'une quelconque des revendications précédentes 1 à 8, dans laquelle le substrat caoutchouteux possédant une Tg inférieure à 0°C est un caoutchouc diénique tel que du polybutadiène, des polymères de butadiène avec du styrène ou de l'acrylonitrile ayant une teneur en butadiène d'au moins 50%, un caoutchouc séquencé linéaire ou un caoutchouc séquencé radial à base de butadiène.

12. La composition thermoplastique polymère selon l'une quelconque des revendications précédentes, dans laquelle le monomère vinylique aromatique est le styrène.

13. La composition thermoplastique polymère selon l'une quelconque des revendications précédentes, dans laquelle le monomère acrylique est l'acrylonitrile.

14. La composition thermoplastique polymère selon l'une quelconque des revendications précédentes, clans laquelle le copolymère séquencé (C₃) est du type (X-Y) comprenant une première séquence ou bloc (X) formé de motifs monomères provenant d'un monomère vinylique aromatique et une deuxième séquence ou bloc (Y) formé de motifs monomères provenant d'un ester de l'acide (méth)-acrylique.

15. La composition thermoplastique polymère selon la revendication 14, dans laquelle les deux blocs (X) et (Y) sont reliés par un monomère alpha méthylstyrène ou 1,1'-diphényléthylène intermédiaire.

16. La composition thermoplastique polymère selon la revendication 14 ou 15, dans laquelle le rapport pondéral entre les deux blocs (X) et (Y) s'échelonne de 5:1 à 1:5.

17. La composition thermoplastique polymère selon l'une quelconque des revendications précédentes, clans laquelle l'ester de l'acide (méth)acrylique est choisi parmi un ester alkylique en C₁-C₈ de l'acide (méth)acrylique ; un ester cycloalkylique en C₄-C₈ de l'acide (méth)acrylique ; un ester phénylique et un ester de phényle substitué par un alkyle en C₁-C₈ de l'acide (méth)acrylique.

18. La composition thermoplastique polymère selon l'une quelconque des revendications précédentes 14 à 17, dans laquelle le bloc (X) est formé de motifs dérivés du styrène et le bloc (Y) est formé de motifs dérivés du méthacrylate de méthyle.

19. La composition thermoplastique polymère selon l'une quelconque des revendications précédentes, dans laquelle le copolymère séquencé (X-Y) (C₃) possède un poids moléculaire de situant entre 4.000 et 2.000.000, de préférence entre 16.000 et 400.000 et les blocs (X) et (Y) possèdent chacune un poids moléculaire moyen compris entre 2.000 et 1.000.000.

20. La composition thermoplastique polymère selon l'une quelconque des revenclications précédentes, dans laquelle le copolymère séquencé (C₃) possède une structure linéaire.

21. La composition thermoplastique polymère selon l'une quelconque des revendications précédentes, contenant en plus des additifs de renforcement, des agents ignifuges, des colorants, des pigments, des stabilisants et/ou des lubrifiants.

22. La composition thermoplastique polymère selon la revendication 19, dans laquelle l'additif de renforcement est choisi dans le groupe constitué par des fibres de verre, des fibres de carbone, des fibres organiques ou inorganiques de module élevé et des fibres métalliques, en des quantités n'excédant pas 50% en poids par rapport à la composition totale.

23. La composition thermoplastique polymère selon la revendication 5, dans laquelle n est compris entre 60 et 600.

24. La composition thermoplastique polymère selon la revendication 6, clans laquelle la viscosité intrinsèque, mesurée dans du chloroforme à 23°C, est comprise entre 0,30 et 0,90 dl/g.

25. La composition thermoplastique polymère selon la revendication 11, dans laquelle la teneur en butadiène est d'au moins 80% en poids.

26. La composition thermoplastique polymère selon la revendication 19, dans laquelle les blocs (X) et (Y) possèdent chacun un poids moléculaire moyen s'échelonnant de 8.000 à 200.000.
